Europäisches Patentamt

European Patent Office

Office européen des brevets

(11) Veröffentlichungsnummer: **0 000 859**
**A1**

## (12) EUROPÄISCHE PATENTANMELDUNG

(21) Anmeldenummer: 78100011.2

(51) Int. Cl.²: **G 05 D 11/02**

(22) Anmeldetag: 01.06.78

(30) Priorität: 16.08.77 DE 2737383

(43) Veröffentlichungstag der Anmeldung: 07.03.79
Patentblatt 79/5

(84) Benannte Vertragsstaaten: FR GB NL

(71) Anmelder: EUROPÄISCHE
ATOMGEMEINSCHAFT (EURATOM), Bâtiment Jean
Monnet Plateau du Kirchberg Boîte Postale 1907,
Luxembourg (LU)

(72) Erfinder: Glaude, Philémon, G.J.M., 62, Hulstplantsoen,
Schoorl (NL)
Erfinder: Nagy, Endre, 34 Plevierweg,
Groet (Schoorl) (NL)
Erfinder: Kohnen, Hans Willi, 24, Beek, Bergen (NL)
Erfinder: Schipper, Adrianus, J.J., 7, Talingstraat,
Groet (Schoorl) (NL)
Erfinder: Bobeldijk, Cornelis, 20, Plevierweg,
Groet (Schoorl) (NL)

(74) Vertreter: Müller-Börner, Richard, Dipl.- Ing. et al,
Patentanwälte Müller-Börner, Wey & Körner
Podbielskiallee 68, D-1000 Berlin-Dahlem 33 (DE)

(54) Verfahren und Vorrichtung zum Mischen von Gasen in präzisem Verhältnis.

(57) Es handelt sich um ein Verfahren zum Mischen von Gasen in präzisem Verhältnis unter definierter Beimischung eines ersten Gases zu einem kontinuierlich strömenden Verdünnungsgas sowie eine Vorrichtung zur Durchführung des Verfahrens.

Die Erfindung geht davon aus, dass eine besonders genaue Dosierung der Gasbeimischung in einem weiten Bereich durch eine periodische Zugabe von definierten Gasmengen möglich ist, wobei bei einer bevorzugten Weiterbildung der Erfindung die Mengenverhältnisse in einfacher Weise über die gewählten Druckverhältnisse steuerbar sind. Durch eine Heraufsetzung des Druckes des beizumischenden Gases wird die Taktfrequenz der Beimischung des definierten Volumens erhöht. Dabei ist durch die Druckveränderung des beizumischenden Gases eine viel feinere Mengendosierung möglich, als es bei den bekannten Verfahren und Vorrichtungen der Fall ist. Die Druckveränderung der beteiligten Gaskomponenten stellt ein an sich sinnfälliges Mittel zur Veränderung der Gasteile einer Gasmischung dar, das dem Benutzer von Mischvorrichtungen einfacherer Art geläufig ist.

Bei dem erfindungsgemässen Verfahren wird jedoch die Steuerung des Druckes unter Auswertung einer Druckdifferenz in eine hochgenaue Steuerung von Mengenvolumina umgesetzt. Die periodische Beimischung kleiner Volumina des ersten Gases bei zeitlich konstanter Strömung des Verdünnungsgases erfolgt in einer Gas-Dosiervorrichtung (5), die eine Kammer (12) aufweist, die mit einer Leitung (1) für das Verdünnungsgas mindestens zeitweise und mit einer Zufuhrleitung (Leitungsteil) (2) für das erste Gas periodisch verbunden ist.

EUROPÄISCHE ATOMGEMEINSCHAFT
(EURATOM)


Verfahren und Vorrichtung zum Mischen von Gasen in
präzisem Verhältnis


Die Erfindung betrifft ein Verfahren zum Mischen von Gasen in präzisem Verhältnis unter definierter Beimischung eines ersten Gases zu einem kontinuierlich strömenden Verdünnungsgas sowie eine Vorrichtung zur Durchführung des Verfahrens.

In industriellen und Forschungs-Chemielaboratorien sind für verschiedene Anwendungen Standard- oder Eich-Gasmischungen notwendig. Da derartige Gasmischungen in vorgefertigter Form in der Regel umständlich zu beschaffen sind, eine lange Lieferzeit haben und darüber hinaus auch relativ kostspielig sind, ist der Laborchemiker bestrebt, sich derartige Gasmischungen selbst herzustellen, wenn er sie benötigt. Da dabei die Mischungsverhältnisse eine große Genauigkeit aufweisen müssen, ist aber auch die Eigenherstellung in der Regel mit Schwierigkeiten verbunden.

In der Vergangenheit sind verschiedene Versuche unternommen worden, Verfahren und Vorrichtungen zu entwickeln, die es gestatten, Gasmischungen nach den jeweiligen Erfordernissen am Orte oder Verwendung kurzfristig herzustellen. So wurden beispielsweise Gasmischungen mittels Meßzylindern unter kombinierter Auswertung von Partialdruck- und Gewichtsmessungen hergestellt. Dieses Verfahren ist jedoch zeitraubend, kostenaufwendig und erfordert eine gewisse Menge Spezialkenntnisse und Erfahrung. Die Genauigkeit dieses Verfahrens wird durch Absorptionseffekte eingeschränkt. Für Konzentrationen von Gasbeimischungen, die geringer sind als 1 ppm, ist das Verfahren in der Praxis nicht mehr anwendbar.

Bei einem anderen Verfahren durchdringt ein unter Druck verflüssigtes Gas mit einer bestimmten Rate die Wandung eines Teflonrohrs, in das es eingeschlossen ist. Ein Verdünnungsgas, dem das verflüssigte Gas beigemischt werden soll, umströmt das Permeationsrohr von außen. Der Nachteil dieses Verfahrens besteht darin, daß es auf leicht verflüssigbare Gase wie $SO_2$, $H_2S$, $NO_2$ etc. beschränkt ist.

Eine Vorrichtung zur Erzeugung von Eichmischungen zweier Fluide ist in der LU-PS 57 552 beschrieben. Dabei strömt das beizumischende Gas unter Druck durch eine Düse in eine Mischkammer ein, welche von dem Träger- oder Verdünnungsgas durchströmt wird. Die Mengen der beteiligten Gase werden von einer Vorrichtung gesteuert, welche die Bestandteile des resultierenden Gasgemisches quantitativ analysiert und Abweichungen von einem vorgegebenen Sollwert feststellt. Diese Vorrichtung weist den Nachteil auf, daß sehr kleine Gasbeimengungen nur schwer zu bewerkstelligen sind. Außerdem besteht die Gefahr, daß sich bei der Steuerung der Mengen der beteiligten Gase Regelschwingungen ausbilden.

Der Erfindung liegt die Aufgabe zugrunde, ein Verfahren und eine Vorrichtung zur Durchführung des Verfahrens anzugeben, die es ermöglichen, Gasanteile in einem präzisen Verhältnis kontinuierlich zu mischen, wobei die Möglichkeit bestehen soll, das Mischungsverhältnis in einem breiten Bereich zu variieren. Die gewünschten Gasmischungen sollen ohne besondere Vorbereitungen auch von nicht spezialisierten Kräften mit einer einfachen Vorrichtung herstellbar sein.

Diese Aufgabe wird erfindungsgemäß durch die periodische Beimischung kleiner Volumina des ersten Gases bei zeitlich konstanter Strömung des Verdünnungsgases gelöst.

Besonders vorteilhaft bei dem erfindungsgemäßen Verfahren ist die Tatsache, daß die Menge des dem Verdünnungsgas beizumischenden ersten Gases in einfacher Weise über die herrschenden Druckverhältnisse zu steuern ist.

Der Erfindung liegt die Erkenntnis zugrunde, daß eine besonders genaue Dosierung der Gasbeimischung in einem weiten Bereich durch eine periodische Zugabe von definierten Gasmengen möglich ist, wobei bei einer bevorzugten Weiterbildung der Erfindung die Mengenverhältnisse in einfacher Weise über die gewählten Druckverhältnisse steuerbar sind. Durch eine Heraufsetzung des Druckes des beizumischenden Gases wird die Taktfrequenz der Beimischung des definierten Volumens erhöht. Dabei ist durch die Druckveränderung des beizumischenden Gases eine viel feinere Mengendosierung möglich, als es bei den bekannten Verfahren und Vorrichtungen der Fall ist. Die Druckveränderung der beteiligten Gaskomponenten stellt ein an sich sinnfälliges Mittel zur Veränderung der Gasteile einer Gasmischung dar, das dem Benutzer von Mischvorrichtungen einfacherer Art geläufig ist. Bei dem erfindungsgemäßen Verfahren wird jedoch die Steuerung des Druckes unter Auswertung einer Druckdifferenz in eine hochgenaue Steuerung von Mengenvolumina umgesetzt.

Bevorzugte Weiterbildungen der Erfindung sind in den Unteransprüchen gekennzeichnet. Ein vorteilhaftes Ausführungsbeispiel des erfindungsgemäßen Verfahrens bzw. der Vorrichtung zur Durchführung des Verfahrens ist in der Zeichnung dargestellt und wird nachfolgend näher beschrieben. Es zeigen:

Fig. 1   eine schematische Darstellung einer Vorrichtung zur kontinuierlichen Mischung von Gasen;

Fig. 2   eine schematische Darstellung einer elektrischen Schaltung zur Ansteuerung des in Fig. 1 dargestellten Steuerventils in Abhängigkeit von der ebenfalls in Fig. 1 dargestellten Gas-Dosiervorrichtung;

Fig. 3   eine Schnittdarstellung der Dosier-Vorrichtung gemäß Fig. 1;

Fig. 4   die Abhängigkeit der Arbeitsfrequenz der Gas-Dosiervorrichtung von der Druckdifferenz zwischen der Primär- und Sekundär-Gasleitung in einer Diagrammdarstellung;

Fig. 5   die Abhängigkeit des Verhältnisses der Gaskonzentrationen in der Primär- und der Sekundär-Gasleitung in Abhängigkeit vom reziproken Wert der Arbeitsfrequenz der Gas-Dosiervorrichtung, ebenfalls im Diagramm dargestellt, und

Fig. 6   die Abhängigkeit der Arbeitsfrequenz der Gas-Dosiervorrichtung von der Gaskonzentration in der Sekundär-Gasleitung.

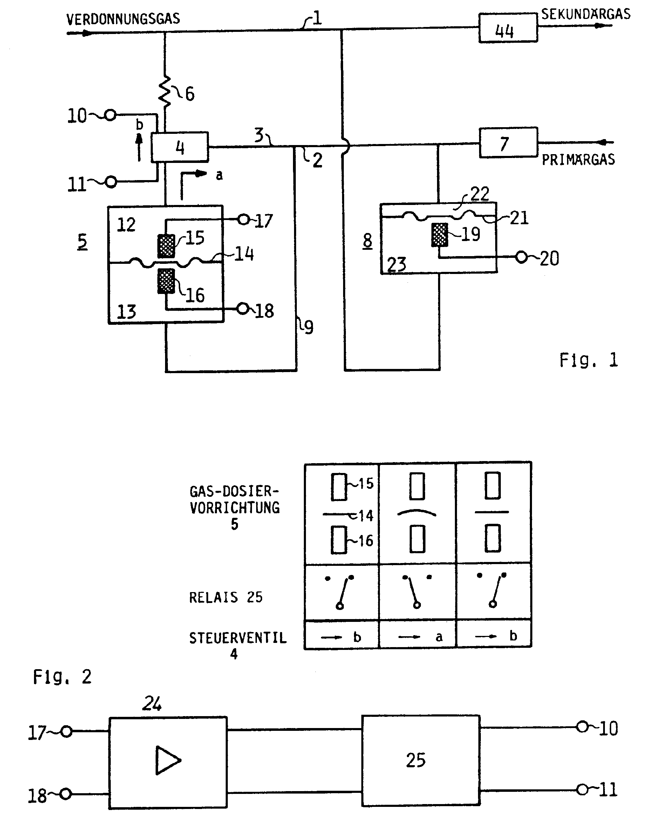

In der in Fig. 1 wiedergegebenen schematischen Darstellung einer Vorrichtung zur Durchführung des Verfahrens wird ein Verdünnungsgas in einer Leitung von in der Zeichnung links her zugeführt. Ein dem Verdünnungsgas beizumischendes Primär gas gelangt über Leitungsteile 2 und 3 über ein Schaltventil 4 in eine Gas-Dosiervorrichtung 5 und von dort zurück über das Schaltventil 4 und eine Drossel 6 in die
Leitung 1, wo es dem Verdünnungsgas beigemischt wird. Der
Druck des Primärgases in dem Leitungsteil 2 wird durch
einen Druckregler 7 durch ein Differential-Manometer 8 so
gesteuert, daß zwischen der Leitung 1 und dem Leitungsteil
2 eine vorgegebene Druckdifferenz besteht. Die Gas-Dosier-
vorrichtung ist über einen Leitungsteil 9 zusätzlich mit
dem Leitungsteil 2 verbunden, so daß hier ein Druckausgleich
stattfinden kann. Das Schaltventil 4 wird über elektrische
Anschlüsse 10 und 11 gesteuert, wobei es abwechselnd in
Richtung der Pfeile a und b eine Leitungsverbindung öffnet.

Die Gas-Dosiervorrichtung weist zwei Kammern 12 und 13 auf,
die durch eine Membran 14 getrennt sind. Die Kammer 12 ist
mit dem Schaltventil 4 und die Kammer 13 mit dem Leitungsteil 9 verbunden. Die Stellung der Membran 14 wird von zwei
Detektoren 15 und 16 abgefühlt, wobei über einen elektrischen Anschluß 18 ein Signal abgegeben wird, wenn sich die
Membran in einer unteren Extremstellung befindet. Das Differential-Manometer 8 ist ähnlich aufgebaut wie die Gas-
Dosiervorrichtung 5, weist jedoch nur einen Detektor 19 mit
einem elektrischen Anschluß 20 auf. Eine Membran 21 trennt
hier zwei Kammern 22 und 23, wobei die Kammer 22 mit dem
Leitungsteil 2 und die Kammer 23 mit der Leitung 1 in Verbindung steht. Der Detektor 19 gibt ein elektrisches Signal
zum Anschluß 20 ab, wenn eine vorgegebene Auslenkung der
Membran 21 erreicht ist, der Überdruck im Leitungsteil 2 im
Vergleich zur Leitung 1 also einen bestimmten Wert erreicht.

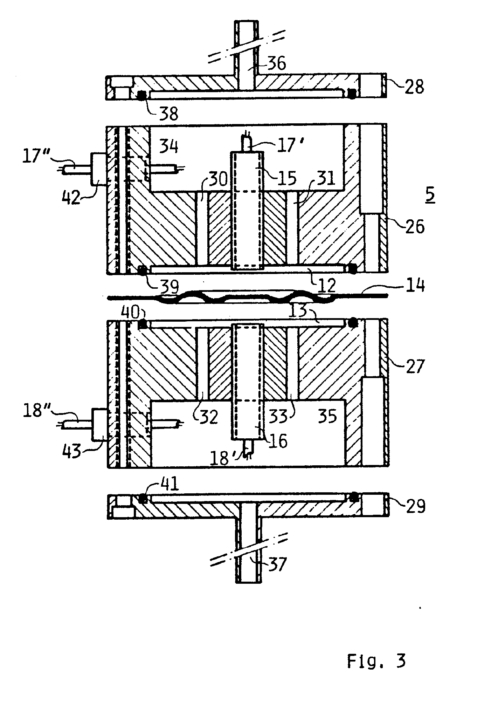

In Fig. 2 ist die Ansteuerung des Schaltventils 4 in Abhängigkeit von den Detektoren 15 und 16 in der Gas-Dosier-
vorrichtung 5 schematisch dargestellt. Die elektrischen
Anschlüsse 17 und 18 der Gas-Dosiervorrichtung in Fig. 1 sind mit dem Eingang einer Verstärker- und Stromversorgungseinrichtung 24 verbunden. Letztere steuert ein Relais 25 an, dessen Ausgang zu elektrischen Anschlüssen 10 und 11 des Schaltventils 4 in Fig. 1 führt.

In einer in Fig. 2 oberhalb des Relais 25 wiedergegebenen Übersicht sind die Schaltstellungen des Relais 25 und die resultierenden Stellungen des Schaltventils 4 in Abhängigkeit von der Position der Membran 14 zwischen den Detektoren 15 und 16 dargestellt: Nimmt die Membran ihre untere Endlage in der Nähe des Detektors 16 ein, so wird das Relais 25 betätigt und es wird der Verbindungsweg b des Schaltventils 4 geöffnet. Nimmt dagegen die Membran 14 ihre obere Endlage in der Nähe des Detektors 15 ein, so schaltet das Relais 25 wieder um und es wird der Verbindungsweg a des Schaltventils 4 geöffnet. In dem rechten Block der Darstellung nimmt die Membran 14 wieder ihre untere Endlage ein und der Schaltvorgang entspricht dem im äußeren linken Block dargestellten. Es wird damit wieder der Verbindungsweg b im Schaltventil 4 geöffnet.

In Fig. 3 ist ein konstruktives Ausführungsbeispiel der Gas-Dosiervorrichtung 5 gemäß Fig. 1 dargestellt. Um die Übersichtlichkeit der Zeichnung zu verbessern, ist die Gas-Dosiervorrichtung in Fig. 3 in teilweise zerlegtem Zustand wiedergegeben. Sie besteht aus einem Ober- und einem Unterteil 26 bzw. 27 sowie Deckelteilen 28 und 29, die mittels Schrauben miteinander verbindbar sind. Die Membran 14 wird zwischen Ober- und Unterteil 26 bzw. 27 eingespannt und trennt die Kammern 12 und 13 voneinander. Die Kammern 12 und 13 stehen über Verbindungswege 30 und 31 bzw. 32 und 33 mit Hohlräumen 34 und 35 in Verbindung, in die ihrerseits Leitungsanschlüsse 36 und 37 münden. Der Leitungsanschluß 36 führt zum Schaltventil 4 und der Leitungsanschluß 37 steht mit dem Leitungsteil 9 in Verbindung. Dichtungsringe 38 bis 41 schließen das Innere der Gas-Dosiervorrichtung 5 nach außen hin hermetisch ab, wenn sie zusammengesetzt ist. Die Detektoren 15 und 16 sind in das Ober- bzw. Unterteil 26 bzw. 27 eingeschraubt. Sie sind mit elektrischen Zuleitungen 17'/17" bzw. 18'/18" versehen, welche durch Durchführungsteile 42 und 43 hindurch aus dem Gehäuse der Gas-Dosiervorrichtung 5 herausgeführt sind und die elektrischen Anschlüsse 17 und 18 (Fig. 1) derselben bilden. Die Detektoren 15 und 16 können dabei als elektrische Annäherungsschalter verschiedener Art, wie beispielsweise Kontakt-, kapazitive oder induktive Schalter, ausgebildet sein.

Das in Fig. 1 dargestellte Differential-Manometer 8 entspricht vorteilhafterweise in seinem konstruktiven Aufbau demjenigen der Gas-Dosiervorrichtung 5. Es entfällt bei der Montage lediglich das Oberteil 26, so daß das Deckelteil 28 direkt mit der Membran und dem Unterteil verbunden ist. Bei einer vorteilhaften Weiterbildung der Erfindung, die eine besonders kompakte Bauform zuläßt, können das Differential-Manometer 8 und die Gas-Dosiervorrichtung 5 direkt in der Weise räumlich miteinander verbunden sein, daß das Differential-Manometer in Form eines weiteren Unterteils einschließlich eines Deckelteils und einer zusätzlichen Membran an das Unterteil 27 der Gas-Dosiervorrichtung angeschlossen sind, wobei dann der Hohlraum 35 mit einem zusätzlichen mit dem Leitungsteil 9 in Verbindung stehenden Leitungsstutzen versehen sein muß. Diese Konstruktion macht sich die Tatsache zunutze, daß unterhalb der Membran 14 der Gas-Dosiervorrichtung 5 und oberhalb der Membran 21 des Differential-Manometers 8 der selbe Druck herrscht.

Das erfindungsgemäße Verfahren zur kontinuierlichen Mischung von Gasen läuft bei der dargestellten Vorrichtung nun folgendermaßen ab: Das den Druckregler 7 passierende Primärgas stellt ein reines Gas oder eine Mischung bekannter Zusammensetzung dar. Unter der Annahme, daß das Schaltventil zunächst in Richtung a geöffnet sei, füllen sich
die beiden Kammern 12 und 13 der Gas-Dosiervorrichtung 5
mit dem Primärgas gleichmäßig auf. Das Schaltventil 4
kann beispielsweise durch ein Magnetventil gebildet werden,
welches in nicht aktiviertem Zustand den Weg a öffnet, während es den Verbindungsweg b öffnet, wenn seine Magnetspule
von Strom durchflossen und es damit aktiviert ist. Das Verdünnungsgas durchströmt die Leitung 1 mit einer vorbestimmten konstanten Strömungsgeschwindigkeit, welche mittels
eines Durchflußmessers 44 (Fig. 1) kontrolliert werden
kann. Mittels des Druckreglers 7 wird ein bestimmter Überdruck $\Delta P$ des primären Gases in Bezug auf das Sekundärgas
eingestellt, welcher mittels des Differential-Manometers 8
kontrolliert werden kann. Es ist dabei auch eine Anordnung
anwendbar, bei der der Druckregler 7 den Druck im Leitungsteil 2, gesteuert über den elektrischen Anschluß 20 des
Differential-Manometers 8, selbsttätig bei einem vorgegebenen Überdruck $\Delta P$ hält.

Wenn die beiden Kammern 12 und 13 der Gas-Dosiervorrichtung
5 gleichmäßig mit Gas gefüllt sind, nimmt die Membran 14
ihre dem Detektor 16 angenäherte Position ein (entsprechend
den beiden äußeren Darstellungen in der Übersicht gemäß
Fig. 2). Daraufhin wird die Magnetspule im Schaltventil 4
aktiviert und der Verbindungsweg b geöffnet. Jetzt strömt
eine geringe Menge des beizumischenden Primärgases über die
Drossel 6 in die Leitung 1 und expandiert in das Verdünnungsgas. Damit wird der Druck in der Kammer 13 größer als
derjenige in der Kammer 12 der Gas-Dosiervorrichtung 5. Die
Membran 14 wird in Richtung auf den Detektor 15 ausgelenkt.
Daraufhin wird der Stromfluß durch die Magnetspule des
Schaltventils 4 wieder unterbrochen und es stellt sich der
Verbindungsweg a ein, wodurch die Kammer 12 der Gas-Dosier-
vorrichtung erneut mit Primärgas gefüllt wird, dessen Druck gleich demjenigen im unteren Systembereich ist, der vom Druckregler 7 gehalten wird. Über den Verbindungsweg b und die Drossel 6 entspannt sich die in der Kammer 12 befindliche Gasmenge anschließend wieder in das Verdünnungsgas auf der Leitung 1.

Dieser Ablauf wiederholt sich fortlaufend in der Weise, daß mit einer bestimmten Wiederholungsrate pro Zeiteinheit definierte Gasmengen dem Verdünnungsgas beigemischt werden. Der Druckabfall in der Kammer 12 beträgt jeweils $\delta P$. Die Frequenz der "Injektion" des Primärgases in das Verdünnungsgas ist über die Veränderung des Differenzdruckes zwischen den Leitungsteilen 2, 3 und 9 gegenüber der Leitung 1 in einem weiten Bereich fein einstellbar, wie aus den folgenden Ableitungen und Diagrammen ersichtlich ist. Durch die Drossel 6 wird die an sich impulsförmige Beimischung des Primärgases in das Verdünnungsgas "geglättet". Der Querschnitt der Drossel 6 kann dabei um so enger gewählt werden, je größer die Druckdifferenz $\Delta P$ im vorgesehenen Arbeitsbereich eingestellt wird, wobei die Glättungswirkung entsprechend zunimmt. Dadurch ist es möglich, das Mischverfahren in weiten Grenzen dem vorgesehenen Einsatzbereich anzupassen. Ist zum Beispiel die Strömungsgeschwindigkeit des Verdünnungsgases in der Leitung 1 gering, wird man bestrebt sein, eine Gasbeimischung zu erreichen, die möglichst kleinen Schwankungen unterliegt, wobei geeignete Maßnahmen, wie beispielsweise eine große Druckdifferenz $\Delta P$, getroffen werden können, um auch die Nachfüllzeit für die Kammer 12 klein zu halten.

Die während eines jeden "Injektionsvorgang" dem Verdünnungsgas beigemischte Volumenmenge Primärgas ergibt sich nach der Formel

$$v = V \cdot \frac{\delta P}{760} \cdot \frac{273}{273+T} \cdot$$

Dabei ist V das Volumen in der Kammer 12 einschließlich des Volumens des Schaltventils 4 für den Fall, daß der Durchlaßweg b geöffnet ist. V stellt damit eine unveränderliche Größe dar. Bei fest angebrachten Detektoren 15 und 16 ist auch für eine gegebene Drossel 6 der Wert von $\delta P$ festgelegt, so daß die Arbeitsfrequenz f der Gas-Dosiervorrichtung eine Funktion von $\Delta P$ bildet:

$$f = k \cdot \Delta P$$

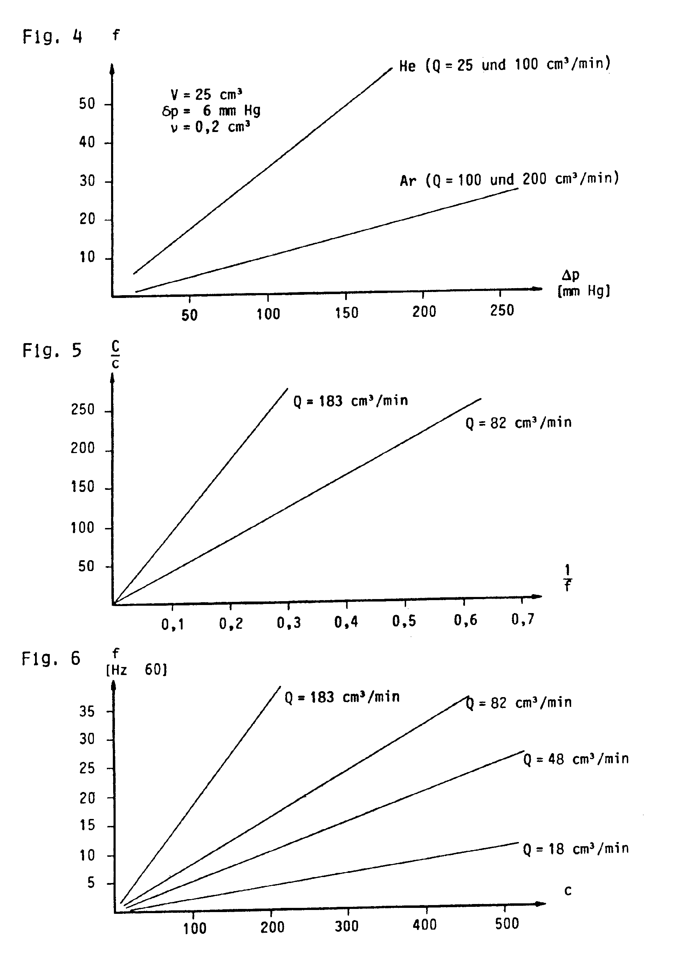

Dieser Zusammenhang ist in Fig. 4 dargestellt. Die Konstante k, welche die Steigung der Geraden bestimmt, hängt von der Art des Primärgases ab. Das Verhältnis der Konzentration C des Primärgases zu derjenigen des Primärgases im Verdünnungsgas ergibt sich nach der Formel:

$$\frac{C}{c} = \frac{1}{f} \cdot \frac{Q}{v} + 1$$

Die Abhängigkeit des Konzentrationsverhältnisses von der reziproken Arbeitsfrequenz der Gas-Dosiervorrichtung ist in dem Diagramm gemäß Fig. 5 wiedergegeben, Q ist dabei die von dem Durchflußmesser 44 gemessene Menge des Sekundärgases pro Zeiteinheit.

In dem in Fig. 6 wiedergegebenen Diagramm ist die Abhängigkeit der Frequenz f von der Konzentration c dargestellt. Da alle diese Zusammenhänge proportional sind, ist im Einzelfall eine genaue Einstellung des gewünschten Mischungsverhältnisses möglich. Bei einer vorgegebenen Einrichtung sind die Größen V, $\delta P$ und v konstant. Die Abhängigkeit

$$f = k \cdot \Delta P$$

kann für das jeweils verwendete Primärgas ermittelt und graphisch dargestellt werden. Die Veränderung der Konzentration c im Sekundärgas kann dann jeweils durch das alleinige Verändern von $\Delta P$ oder Q erreicht werden. Durch eine geeignete Wahl der übrigen Parameter ist es möglich, daß der gewünschte Konzentrationsänderungsbereich in einen ausgewählten Bereich einstellbarer Druckänderungen fällt. Über eine Variierung der Steigungen der Geraden läßt sich auch die Feinheit der Einstellung des Mischungsverhältnisses, d.h. die Veränderung der Konzentration pro Änderung der Druckdifferenz einstellen. Der Anteil des zugemischten Gases läßt sich im Bereich von ppm bis Prozent verändern. Um Mischungen von mehr als zwei Gasanteilen zu erhalten, lassen sich mehrere der dargestellten Vorrichtungen hintereinanderschalten, so daß die entsprechenden Gasbeimischungen nacheinander erfolgen.

Bei einer anderen vorteilhaften Ausführungsform der Erfindung können die dargestellten mathematischen Zusammenhänge und die für die jeweiligen Gase spezifischen Größen in einem Mikroprozessor abgespeichert werden, welcher während des Mischungsvorgangs auch die Steuerung und Überwachung von Gasdurchfluß und -druck übernimmt. Damit ist es möglich, eine Gasmischungsvorrichtung aufzubauen, welche nach Voreinstellung des gewünschten Mischungsverhältnisses und der beteiligten Gase an einem Bedienungspult es ermöglicht, eine vorgegebene Menge einer gewünschten Gasmischung ohne komplizierte Überlegungen und Einstellungen direkt hergestellt zu erhalten.

Patentansprüche

1. Verfahren zum Mischen von Gasen in präzisem Verhältnis unter definierter Beimischung eines ersten Gases zu einem kontinuierlich strömenden Verdünnungsgas, gekennzeichnet durch die periodische Beimischung kleiner Volumina des ersten Gases bei zeitlich konstanter Strömung des Verdünnungsgases.

2. Verfahren nach Anspruch 1, dadurch gekennzeichnet, daß die Beimischung des ersten Gases aus einem Speichervolumen (Kammer 12) heraus erfolgt, das jeweils mit diesem Gas bis zu einem Überdruck ($\Delta$P) gegenüber dem Druck des Verdünnungsgases gefüllt wird, wenn der Druck um einen Differenzdruck ($\delta$P) kleiner als der Fülldruck ist.

3. Verfahren nach Anspruch 2, dadurch gekennzeichnet, daß die Beimischung des ersten Gases und das Füllen des Speichervolumens (Kammer 12) abwechselnd erfolgen.

4. Verfahren nach einem der vorangehenden Ansprüche, dadurch gekennzeichnet, daß die Beimischung des ersten Gases über eine Drossel (6) erfolgt.

5. Verfahren nach einem der vorangehenden Ansprüche, dadurch gekennzeichnet, daß der Überdruck ($\Delta$P) des ersten Gases in Bezug auf den Druck des Verdünnungsgases konstant gehalten wird.

6. Vorrichtung zur Durchführung des Verfahrens nach Anspruch 1, dadurch gekennzeichnet, daß eine Gas-Dosiervorrichtung (5) vorgesehen ist, welche eine Kammer (12)aufweist, die mit einer Leitung (1) für das Ver-

-2-　　　　0000859

dünnungsgas mindestens zeitweise und mit einer Zufuhrleitung (Leitungsteil 2) für das erste Gas periodisch verbunden ist.

7. Vorrichtung nach Anspruch 6, dadurch gekennzeichnet, daß die Kammer (12) von der Zufuhrleitung (Leitungsteil 2) getrennt wird, wenn der Druck in der Kammer (12) einen Überdruck ($\Delta$P) gegenüber dem Druck des Verdünnungsgases aufweist und die Kammer (12) mit der Zufuhrleitung (Leitungsteil 2) verbunden ist, wenn der Druck um einen vorgegebenen Differenzdruck ($\delta$P) unter dem Druck in der Kammer (12) beim Trennen liegt.

8. Vorrichtung nach einem der Ansprüche 6 oder 7, dadurch gekennzeichnet, daß die Gas-Dosiervorrichtung (5) mit einer in Abhängigkeit von dem Druck in der Kammer (12) auslenkbaren Membran (14) versehen ist, welche über Detektoren (15,16) die Verbindung der Kammer (12) zu der Zufuhrleitung (Leitungsteil 2) bei den genannten Drücken herstellt bzw. unterbricht.

9. Vorrichtung nach Anspruch 8, dadurch gekennzeichnet, daß für die Zeit des Auffüllens der Kammer (12) die Verbindung zu der das Verdünnungsgas führenden Leitung (1) gesperrt ist.

10. Vorrichtung nach einem der Ansprüche 6 bis 9, dadurch gekennzeichnet, daß die Gas-Dosiervorrichtung (5) eine weitere Kammer (13) aufweist, welche durch die Membran (14) von der Kammer (12) getrennt und mit der Zufuhrleitung (Leitungsteil 2) für das erste Gas verbunden ist, wobei der die Unterbrechung der Verbindung zwischen der Kammer (12) und der Zufuhrleitung (Leitungsteil 2) bewirkende Detektor (16) anspricht, wenn der Druck zwischen der Kammer (12) und der weiteren Kammer (13) ausgeglichen ist.

11. Vorrichtung nach einem der Ansprüche 6 bis 10, dadurch gekennzeichnet, daß der Differenzdruck zwischen der das Verdünnungsgas führenden Leitung (1) und der Zufuhrleitung (Leitungsteil 2) durch einen in die letztere eingeschalteten Druckregler (7) auf einem konstanten Wert gehalten wird.

12. Vorrichtung nach Anspruch 11, dadurch gekennzeichnet, daß der Druckregler (7) durch ein zwischen der das Verdünnungsgas führenden Leitung (1) und der Zufuhrleitung (Leitungsteil 2) vorgesehenes Differential-Manometer (8) gesteuert wird.

13. Vorrichtung nach einem der Ansprüche 6 bis 12, dadurch gekennzeichnet, daß für die Beimischung mehrerer Gase zu dem Verdünnungsgas für jedes beizumischende Gas eine Gas-Dosiervorrichtung (5) mit den entsprechenden Steuerungsmitteln vorgesehen ist.

-------------------

VERDONNUNGSGAS 1 SEKUNDÄRGAS

44

6

10 b

11 4 3 2

a

PRIMÄRGAS

7

5 12 17

15

14

13 16 18

9

8 22

21

19

23 20

**Fig. 1**

| GAS-DOSIER-VORRICHTUNG 5 | | | |
|---|---|---|
| 15 14 16 | | |
| RELAIS 25 | | |
| STEUERVENTIL 4 | → b | → a | → b |

**Fig. 2**

17 24 10

18 25 11

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 998 239 (PHILIPS CORP.)<br>* Figuren 2-5; Spalte 4-6 *<br>-- | 1,3,6,9 |
| X | FR - A - 2 276 089 (CHAUDRONNERIE INDUSTRIELLE DE BETHUNE)<br>* Figuren 1-2; Anspruch *<br>-- | 1,3,6,9,13 |
| X | US - A - 2 238 747 (ORNSTEIN)<br>* Figuren; Seite 1-2 *<br>-- | 1,3,4,6,9 |
|  | FR - A - 1 520 292 (LANG)<br>* Figuren 1-3 *<br>---- | 6,9,13 |

**KLASSIFIKATION DER ANMELDUNG (Int.Cl.²)**

G 05 D 11/02

**RECHERCHIERTE SACHGEBIETE (Int. Cl.²)**

B 01 F
G 05 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-07-1978 | KUSARDY |

EPA form 1503.1 06.78